Europäisches Patentamt

European Patent Office

Office européen des brevets

(11) Veröffentlichungsnummer: **0 220 251**
**B1**

(12) **EUROPÄISCHE PATENTSCHRIFT**

(45) Veröffentlichungstag der Patentschrift: 26.09.90

(21) Anmeldenummer: **86902819.1**

(22) Anmeldetag: **17.04.86**

(86) Internationale Anmeldenummer:
**PCT/EP86/00224**

(87) Internationale Veröffentlichungsnummer:
**WO 86/06201 23.10.86 Gazette 86/23**

(51) Int. Cl.⁵: **G 11 B 21/10,** G 11 B 7/095 //
G11B7/00

(54) **AUTOMATISCHES KORREKTURSYSTEM FÜR DEN SERVOKREIS EINES GERÄTES MIT OPTISCHER ABTASTUNG EINES ROTIERENDEN INFORMATIONSTRÄGERS.**

(30) Priorität: **18.04.85 DE 3514034**

(43) Veröffentlichungstag der Anmeldung:
**06.05.87 Patentblatt 87/19**

(45) Bekanntmachung des Hinweises auf die Patenterteilung:
**26.09.90 Patentblatt 90/39**

(84) Benannte Vertragsstaaten:
**AT BE CH DE FR GB IT LI LU NL SE**

(56) Entgegenhaltungen:
EP-A-0 139 332
DE-A-3 005 716
GB-A-2 060 207
GB-A-2 060 217
US-A-4 488 184
US-A-4 488 278

Patents Abstracts of Japan, vol. 8, No. 245
(P-312)(1682) 10 November 1984 & JP, A,
59117762

(73) Patentinhaber: **Deutsche Thomson-Brandt GmbH**
**Hermann-Schwer-Strasse 3 Postfach 1307**
**D-7730 Villingen-Schwenningen (DE)**

(72) Erfinder: **BAAS, Dieter**
**Sofienstrasse 10**
**D-7640 Kehl (DE)**
Erfinder: **NUTZ, Werner**
**Mannheimerstrasse 27**
**D-7730 Villingen-Schwenningen (DE)**

(56) Entgegenhaltungen:

Patents Abstracts of Japan, vol. 8, No. 137,
(P-282)(1574) 26 June 1984 & JP, A, 5936385

Patents Abstracts of Japan, vol. 9, No. 122,
(P-359)(1845) 28 May 1985 & JP, A, 607658

Patents Abstracts of Japan, vol. 9, No. 24
(P-331)(1747) 31 January 1985 & JP, A, 59167879

Patents Abstracts of Japan, vol. 9, No. 68
(P-344)(1791) 28 March 1985 & JP, A, 59201274

Patents Abstracts of Japan, vol. 9, No. 167
(P-372)(1890) 12 July 1985 & JP, A, 6043270
Philips tech. Rev. 40, No. 6, S. 171

Courier Press, Leamington Spa, England.

**Beschreibung**

Die Erfindung betrifft ein automatisches Korrektursystem gemäß dem Oberbegriff des ersten Anspruchs.

Die Abtastung von rotierenden Informationsträgern mit optischen Abtastern kann auf verschiedene Art gestört werden. CD-Spieler beispielsweise reagieren auf äußere Stöße ähnlich wie auf Kratzer oder ähnliche Fehler auf der abzutastenden Platte. Es tritt entweder Spurverlust ein oder zumindest wird das Abtastsystem an der Störstelle um eine Spur nach vorne oder hinten springen. Nach dem Stand der Technik wird bei Zusammenbruch des vorhandenen Servosystems dieser Zustand detektiert und eine entsprechende Neuaktivierung eingeleitet. Während dieser Zeit werden die Audio-Daten stummgesteuert (Mute), um unangenehme Störgeräusche zu vermeiden.

Nach der Stabilisierung der Regelkreise wird die Stummsteuerung wieder aufgehoben. Der Nachteil dieser Technik ist es, daß beim Zusammenbrechen des Servosystems und auch im anderen genannten Störfall der momentane oder letzte gültige Abtastpunkt verloren geht und nach Ablauf der Störphase oder Ende der Störeinwirkung an irgendeinem zufälligen Abtastpunkt fortgefahren wird. Das bewirkt, daß nicht nur Unterbrechungen durch das Stummschalten hörbar sind, sondern daß regelrechte Informations-Versätze, bedingt durch den zufälligen Aufsetzpunkt, akustisch sehr störend wahrgenommen werden.

Aus der Patentanmeldung GB 20 60 217A wird auf Seite 10, 1. Absatz, gezeigt, wie ein Spurfehler-Korrektursystem bei zwei bestimmten Fehlerarten arbeitet, nämlich bei "Hängenbleiben" ("locked groove or track") und bei "nach-vorne-Springen" ("skipped forward"). Für beide Fälle werden Steueralgorithmen vorgeschlagen. Aus diesem Stand der Technik ist es auch bereits bekannt, durch die Art der Verknüpfung der Schaltungsteile des Servosystems je nach Wahl des Betrages der Vorgabe wie auch der Größe eines Zählerstandes eine der Fehlerart und Wirkung auf den Abtaster angepaßte Korrektur vorzunehmen. Der erste Fall tritt insbesondere ein bei der Abtastung von CD-Platten, die Plattenfehler wie Kratzer oder "black dots" aufweisen. Der zweite Fall tritt insbesondere auf bei Stößen von außen gegen das Gerät.

Der vorliegenden Erfindung lag die Aufgabe zugrunde für den ersten Störfall, der zum "Hängenbleiben" führen kann, das bekannte Korrektursystem dahingehend zu verbessern, daß kein Verlust des letzten gültigen Abtastpunktes im Störfall eintritt, so daß das "Hängenbleiben" mit Sicherheit verhindert wird und das System so schnell reagierend zu machen, daß bei plattentypischen Störfällen der genannten Arten akustisch weitgehend nichts wahrnehmbar ist, indem das Abtastsystem über die Störstelle hinweg gesteuert wird. Dazu muß dem Servosystem ein Positioniersignal je nach Art und Größe des Fehlers zugeführt werden.

Die Lösung dieser Aufgabe gelingt erfindungsgemäß nach Anspruch 1.

Weitere Einzelheiten und Ausgestaltungen sind den Unteransprüchen und der nachfolgenden Beschreibung eines Ausführungsbeispiels zu entnehmen.

Nach der Erfindung wird der letzte gültige Abtastpunkt vor Beginn der Störphase festgehalten, die durch servospezifische Indikatorsignale detektiert wird. Daraufhin wird ein der Störung entsprechendes Korrektursignal gebildet, das eine automatische Korrektur auf den letzten gültigen Abtastpunkt vornimmt. So werden vorteilhafterweise Informationslücken vermieden. Wenn das Korrektursystem ausreichend schnell arbeitet, sind Mutephasen praktisch kaum hörbar und somit nicht störend.

Nachfolgend werden zwei Ausführungsbeispiele an hand der Zeichnung besprochen. Diese zeigt in

Figur 1 ein Blockschaltbild eines Korrketursystems, das speziell für Fehler durch äußere Einwirkung geeignet ist, wie es aus dem Stand der Technik bekannt ist;

Figur 2 ein Blockschaltbild eines Korrektursystems, das speziell für die Fehlerkorrektur durch Kratzer oder Ähnliches geeignet ist.

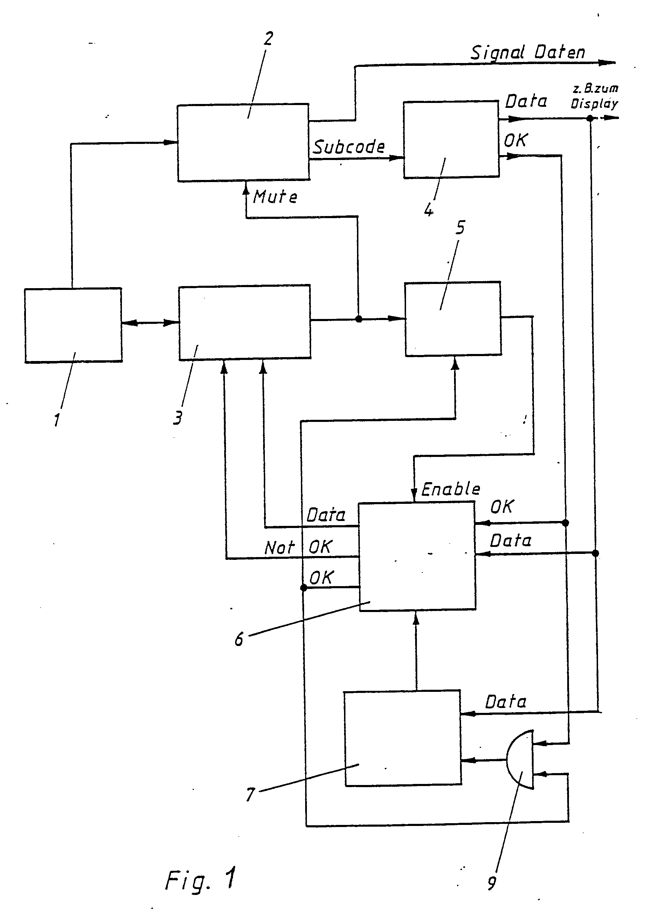

Ein Ausführungsbeispiel eines automatischen Korrektursystems zeigt Figur 1. Hauptbestandteil sind die Blöcke 6 (Vergleich + Korrektur) und 7 (Speicher für aktuellen Subcode). Im Block 7 wird bei Normalbetrieb, d.h. Abtastung zur Wiedergabe ohne Störung, ständig über den Block 4 (Data-Check) und eine Torschaltung 9 die aktuelle Adressinformation abgespeichert. Sobald eine Störung im Servosystem 3 auftritt, aktiviert dieses mittels des Erkennungssignals "Fokus-not-ok/ Track-not-ok" über einen Latch-Baustein 5 den Block 6. Dieser veranlaßt über die Leitung OK ein sofortiges Sperren des Tors 9, so daß zunächst keine weitere Dateneinschreibung in Speicher 7 möglich ist. Weiterhin wird Baustein 5 inaktiviert. Dadurch wird das Signal "Fokus-not-ok/Track-not-ok" in Block 5 festgehalten. Wenn sich das Servosystem 3 nach einer Störung wieder stabilisert hat und somit wieder neue Adress-Daten von Block 4 übertragen werden, findet im Block 6 der Vergleich zwischen alten und neuen Daten statt und ein Korrektursignal wird daraus erzeugt, das das Abtastsystem (Pick-up-System) 1 auf den letzten gültigen Abtastpunkt vor der Störstelle positioniert. Ist dieser Wert erreicht, gibt die Vergleichsstufe 6 ein "ok"-Signal ab, das den Latch-Baustein 5 zurücksetzt und eine neue Dateneinschreibung über das Tor 9 im Speicher 7 veranlaßt. Dieses Vergleichs- und Korrektursystem ist speziell geeignet, um Störungen durch äußere Einwirkungen, wie Schock oder Stoß, auf die optische Abtastung zu beheben.

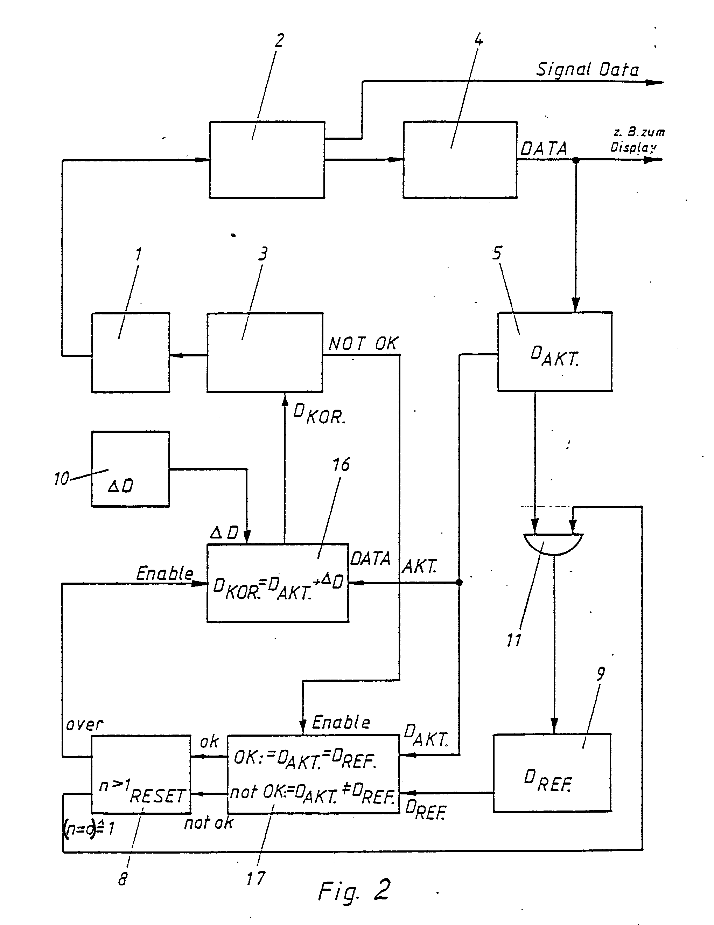

Figur 2 zeigt in einem Blockschaltbild ein erfindungsgemäß verbessertes Korrektursystem, das auf ein bekanntes Servosystem, wie das nach Figur 1, aufbaut und mit diesem zusammenarbeitet. Ohne Störungen werden im normalen Abtast-Mode vom Block Data-Check 4 die aktuellen Daten, die proportional zum Abtastpunkt sind, ausgegeben und ständig im Block 5, einem Speicher abgelegt. Ein Zähler 8 ist dabei im Grundzustand und ein Tor 11 freigeschaltet, so daß Daten auch im Referenz-Speicher 9 ständig gespeichert werden. Solange keine Störung auftritt, sind die aktuellen Daten in den Speichern 5 und 9 gleichzeitig vorhanden und andere Schaltungsteile sind inaktiv. Bei Störung der Abtastung, wenn also der Abtaster (Pick-up) 1 beispielsweise wegen eines Kratzers auf der Spur zurückspringt, gibt das Servosystem 3 ein "not-ok"-Signal ab, das den Vergleicher 17 aktiviert. Da nunmehr die Speicher 5 und 9 gleiche Daten aufweisen, gibt der Vergleicher 17 ein "ok"-Signal an den Zähler 8, der die an der gleichen Stelle verlorenen Abtastpunkte zählt.

Mit anderen Worten wird der Zähler (8) um 1 erhöht, wenn sich bei Freigabe des Vergleichers (17) durch das NOT OK-Signal aus dem Servoteil (3) ergibt, daß der Adressenvergleich aus den Speichern (5) und (9) gleich ist und vom Vergleicher (17) das OK-Signal an den Zähler (8) gelangt.

Das OK-Signal des Vergleichers (17) wird nur dann erzeugt, wenn dem Vergleich der Adressen-Daten $D_{AKT}$ und $D_{REF}$ über das NOT OK-Signal vom Servoteil (3) stattgegeben wird, also $D_{AKT} = D_{REF}$ in dem Augenblick ist, in dem das NOT OK-Signal vom Servoteil (3) erzeug wird.

Ein NOT OK-Signal wird vom Servoteil (3) dann erzeugt, wenn die Abtastung durch eine Störstelle auf der abzutasten den Platte unterbrochen wird. Da die Abtastung an einem anderen Ort (oder Punkt der Platte) sofort wieder einsetzt, gibt auch der Servoteil (3) sofort wieder ein OK-Signal aus und sperrt den Vergleicher (17).

Der Zähler (8) läßt sich auf einen überlaufwert (n = Vorgabezahl des Zählers (8)) einstellen, d.h. wenn überlauf stattfindet, ergibt sich, daß das Signal "OVER" des Zählers (8) das Korrektursystem (16) über "ENABLE" aktiviert. Dort wird entsprechend dem Signal $D_{AKT} + \triangle D$ eine Korrektur $D_{KOR}$ an den Servoteil (3) gegeben, d.h. die Abtastung wird um $\triangle D$ gegenüber der Störstelle vorausversetzt vorgenommen.

Im Fall des überlaufs $n_x = n$ wird der Zähler (8) auf Null gesetzt und damit wird auch wieder das Tor (11) für weitere Speicherungen der Adressen freigegeben.

Spurverlust kann sowohl durch Plattenfehler (Kratzer, Verschmutzung) als auch durch Stoß (gegen das Gerät) erfolgen. Im 1. Fall würde bei einem "Zurückspringen" des Abtasters ein "Wiederhol-Effekt" auftreten, wenn keine weiteren Maßnahmen getroffen werden. Im 2. Fall tritt dieser "Wiederhol-Effekt" nicht auf. Es ist daher im 1. Fall wünschenswert, die Korrektur der Positionierung so vorzunehmen, daß über die Störstelle der Platte hinausgesteuert wird. ($\triangle D$). Deshalb ist der örtliche Vorgabebetrag $\triangle D$ nötig, der aber im 2. Fall nicht erforderlich ist. Arbeitet das Korrektursystem genügend schnell und ist die Vorgabe $\triangle D$ nicht zu groß gewählt, so ist die Störung kaum hörbar. Für n > 1 lassen sich Spurverluste, die durch ein "nach vorne-Springen", also in Abtastrichtung, des Abtasters entstehen, nicht detektieren. Es bleibt dann eine störende Unterbrechung hörbar. In diesem Fall passiert nämlich folgendes: Der Zähler 8 wird zunächst auf "1" gesetzt. In diesem Zustand verharrt die Schaltung bis eine weitere Störung vorkommt. Es erfolgt die Ausgabe eines "not-ok"-Signals aus dem Servosystem 3. Da nun die Daten in den Speichern 5 und 9 nicht miteinander übereinstimmen, wird der Zähler 8 über das "not-ok"-Signal aus dem Vergleicher 17 auf Null gesetzt. Dadurch wird das Tor 11 durchgeschaltet, d.h. freigegeben und in den Referenzspeicher 9 werden die letzten Daten vor der Störung abgelegt. Die Schaltung befindet sich wieder in der Ausgangslage (1.mode).

## Patentansprüche

1. Automatisches Korrektursystem für den Servokreis eines Gerätes mit optischem Abtaster für rotierende Informationsträger, wobei der Servokreis so beschaffen ist, daß er bei Störungen des Abtastsystems bezüglich Fokus und/oder Spur in einem Servosystem (3) ein Detektorsignal (NOT OK) erzeugt und ein Mute-Signal an den am Abtastsystem angeschlossenen Decoder (2) abgibt und so dessen Ausgänge stumm steuert, und wobei aktuelle Adressdaten ($D_{AKT}$) mit gespeicherten, aus vorher abgetasteten Daten gebildeten Adressdaten ($D_{REF}$), in einem Vergleicher (17) verglichen werden und dann, wenn die aktuellen Adressdaten nicht den vorhergesagten Adressdaten entsprechen, ein Erkennungssignal für den Störfall abgeleitet wird und ferner von einem Korrektursystem (16) ein Korrektursignal ($D_{KOR}$) gebildet wird, das an das Servosystem ein Positioniersignal je nach Art und Größe des Fehlers zuführt, dadurch gekennzeichnet, daß ein Zähler (8) mit der Zählkapazität n ≥ 1 sowie ein Vorgabeblock (10) zur Erzeugung eines Wertes $\triangle D$ vorgesehen sind, die mit dem Vergleicher (17) und mit dem Korrektursystem (16) derart in Verbindung stehen, daß bei einer Störung des Servosystems im Falle der übereinstimmung der aktuellen Adressdaten mit den gespeicherten Adressdaten der Zählerinhalt erhöht wird, während bei nichtübereinstimmung der Zähler zurückgesetzt wird, daß nur im zurückgesetzten Zustand des Zählers neue Adressdaten gespeichert werden können und daß ferner das Korrektursystem bei überlauf (OVER) des Zählers ein Korrektursignal bildet, das eine Vorauspositionierung um den Wert $\triangle D$ bezüglich der aktuellen Adresse vornimmt.

2. Automatisches Korrektursystem gemäß Anspruch 1, dadurch gekennzeichnet, daß der Zähler (8) mit dem Wert 1 vorgesetzt ist, wodurch er bei jeder Störung überläuft, und dadurch Spurverluste in beiden Richtungen, also vorwärts und rückwärts, detektiert und eine Korrektur vorgenommen wird.

3. Automatisches Korrektursystem nach Anspruch 1, dadurch gekennzeichnet, daß die Zähler Kapazität (8) mit einem Wert n > 1 vorgesetzt ist und dadurch Spurverluste durch Sprunge rückwarts, d.h. entgegen der Spielrichtung oder durch Hangenbleiben, Korrigiert werden, wenn diese Störstelle entsprechend dem Vorgabewert des Zählers (8) n-mal angelaufen wurde.

4. Automatisches Korrektursystem nach einem oder mehreren der voranstehenden Ansprüche, dadurch gekennzeichnet, daß bei Störstellen auf dem Informationsträger, wie beispielsweise Kratzern, sog. "black dots", ein Hängenbleiben des Abtastsystems verhindert wird.

## Revendications

1. Système correcteur automatique pour le circuit d'asservissement d'un appareil comportant un lecteur optique de supports de données tournants, le circuit d'asservissement étant conçu de façon à ce qu'en cas de perturbation du système de lecture affectant la focalisation et/ou la piste, il élabore un signal de défaut dans un système d'asservissement (3) et envoie un signal d'inhibition du son (mute) au décodeur (2) relié au système de lecture, et inhibe ainsi le son de ses sorties et des données d'adresses courantes ($D_{COUR}$) étant comparées dans un comparateur (17) avec des données ($D_{REF}$) élaborées à partir de données lues auparavant, et qu'ensuite, si les données d'adresses courantes ne correspondent pas aux données d'adresses prévues, un signal de défaut de la perturbation en est dérivé et un signal de correction ($D_{COR}$) est en outre élaboré par un système correcteur (16) qui envoie au système d'asservissement un signal de positionnement fonction du type et de l'importance du défaut, caractérisé en ce qu'il est prévu un compteur (8) ayant une capacité de comptage de n ≥ 1 ainsi qu'un bloc de présélection (10) élaborant une valeur △D, reliés au comparateur (17) et au système correcteur (16) de telle façon que, lors d'une perturbation du système d'asservissement, le contenu du compteur est incrémenté en cas de concordance entre les données d'adresses courantes et les données d'adresses mémorisées, tandis que le compteur est remis à zéro en cas de non concordance, que de nouvelles données d'adresses ne peuvent être stockées que si le compteur est remis à zéro et qu'en outre le système correcteur élabore un signal correcteur en cas de débordement du compteur qui effectue un positionnement décalé de △D vers l'avant par rapport à l'adresse courante.

2. Système de correction automatique selon la revendication 1, caractérisé en ce que le compteur (8) est préréglé à la valeur 1, de sorte qu'il déborde à chaque perturbation, ce qui permet de détecter des pertes de piste dans les deux sens, donc en avant et en arrière, et qu'une correction correspondante est effectuée.

3. Système de correction automatique selon la revendication 1, caractérisé en ce que la capacité du compteur (8) est préréglée à une valeur de n > 1 et que de ce fait les pertes de piste dues à des sauts en arrière, c'est-à-dire dans le sens contraire à la lecture, ou à un blocage sont corrigées lorsque cet endroit défectueux a été abordé autant de fois que la valeur de présélection du compteur (8).

4. Système de correction automatique selon l'une ou plusieurs des revendications ci-dessus, caractérisé en ce qu'en cas de présence d'endroits défuctueux, tels que rayures, "black dots", sur le support de données, un blocage du système de lecture est empêché.

## Claims

1. An automatic correction system for the servo-circuit of a device having an optical pick-up for rotating information carriers wherein the servo-circuit is of such a nature that in the event of disturbances in the pick-up system with regard to focus and/or track, it generates a detector signal (NOT OK) in a servo system (3) and delivers a mute signal to the decoder (2) connected to the pick-up system and thus controls its outputs so that they become mute, and wherein current address data ($D_{AKT}$) are compared, in a comparator (17), with stored address data ($D_{REF}$) formed from data previously picked up, and when the current address data do not correspond to the predicted address data, a signal identifying a disturbance is derived, and furthermore a correction signal ($D_{KOR}$) is formed by a correction system (16) and supplies a positioning signal to the servo system depending on the nature and magnitude of the fault, characterised in that a counter (8) with the counting capacity n ≥ 1 as well as a presetting block (10) for producing a value △D are provided and are in communication with the comparator (17) and with the correction system (16) in such a manner that, on a disturbance in the servo system, in the event of agreement between the current address data and the stored address data, the counter contents are increased whereas in the event of non-agreement, the counter is reset, that fresh address data can only be stored in the reset state of the counter, and that furthermore, on an overflow (OVER) of the counter, the correction system forms a correction signal which carries out a prepositioning by the value △D with regard to the current address.

2. An automatic correction system according to Claim 1, characterised in that the counter (8) is preset with the value 1 as a result of which it overflows on every disturbance and, as a result, detects track losses in both directions, that is to say forwards and backwards, and a correction is carried out.

3. An automatic correction system according to Claim 1, characterised in that the counter capacity (8) is preset with a value n > 1 and as a result track losses through jumps backwards, that is to say counter to the playing direction or through locked track, are corrected if this fault has run up to the preset value of the counter (8) n times.

4. An automatic correction system according to one or more of the preceding Claims, characterised in that, in the event of faults on the information carrier such as scratches so-called "black dots" for example, locking of the pick-up system in the track is prevented.

EP 0 220 251 B1

Fig. 1

Fig. 2